# FASCICULE DE BREVET EUROPEEN

(11) **EP 1 609 669 B1**
(45) Date de publication et mention de la délivrance du brevet: **07.11.2007**
(21) Numéro de dépôt: 05300367.9
(22) Date de dépôt: 11.05.2005
(51) Int. Cl.: B60P 1/28, B62D 21/03, B62D 21/02, B62D 21/14

(54) **Structure de faux chassis adaptable sur des camions porteurs comportant au moins trois essieux du type à axe d'articulation et de levage de benne par la partie mediane**
Hilfsrahmenstruktur für Förderfahrzeuge mit mindestens drei Achsen, lenkbar, und mit Kippgestell.
Auxiliary chassis structure for haulage trucks with three axles, steerable, with tipping body.

(30) Priorité: 24.06.2004 FR 0407105
(43) Date de publication de la demande: 28.12.2005
(73) Titulaire: F.B.I., 42600 Montbrison (FR)
(72) Inventeur: Bourrin, Jean-François, 42600 Ecotay l'Olme (FR)
(74) Mandataire: Dupuis, François

(56) Documents cités:
- FR-A- 2 702 441
- GB-A- 622 028
- US-A- 5 611 570

## Description

L'invention se rattache au secteur technique des camions porteurs à au moins trois essieux et des camions à bennes en général.

Le demandeur a développé un dispositif de levage de bennes, objet du brevet européen numéro 1 162 110, qui fait l'objet d'une très large exploitation sous la marque ROC-LINE. Cette exploitation en elle-même est très satisfaisante et répond parfaitement aux critères initiaux recherchés, de stabilité du camion et de sa benne.

Bien que le succès commercial en soit incontestable, le demandeur a dans le cadre de ses recherches voulu encore optimiser la fabrication du dispositif en garantissant encore mieux la résistance de la benne lors des mouvements et sollicitations qui sont exercés.

La démarche du demandeur a aussi été d'optimiser la fabrication du dispositif pour le rendre encore plus performant en terme de coût.

Un autre objectif a été de concevoir une structure de faux châssis adaptable sur différents types de camions porteurs à au moins trois essieux.

Ces buts et d'autres encore ressortiront bien de la suite de la description.

Selon une première caractéristique de l'invention, la structure de faux châssis adaptable sur des camions porteurs à au moins trois essieux du type à axe d'articulation et de levage par la partie médiane, est remarquable en ce qu'elle est conçue à partir de quatre sous-ensembles profilés et agencés de manière complémentaire pour constituer après assemblage un ensemble unique et monobloc, et en ce qu'elle comprend deux sous-ensembles d'extrémités formant longerons solidaires du châssis inférieur support du camion porteur et prenant en sandwich un sous-ensemble intermédiaire incluant une poutre transversale à partir de laquelle et à ses extrémités sont prévues et disposées les supports d'articulations des pieds des vérins de soulèvement et d'abaissement de la benne, et un sous-ensemble constituant un plateau supérieur à partir duquel sont définies les zones de liaison des sous-ensembles entre eux.

Ces caractéristiques et d'autres encore ressortiront bien de la suite de la description.

Pour fixer l'objet de l'invention illustrée d'une manière non limitative aux figures des dessins où :
- la figure 1 est une vue à caractère schématique illustrant l'application de la structure faux châssis selon l'invention sur un camion porteur ayant au moins trois essieux, l'aménagement de ladite structure étant représenté à titre d'exemple à l'endroit du double essieux arrière.
- la figure 2 est une vue de la structure du faux châssis une fois montée avec articulation latérale par deux vérins de la benne.

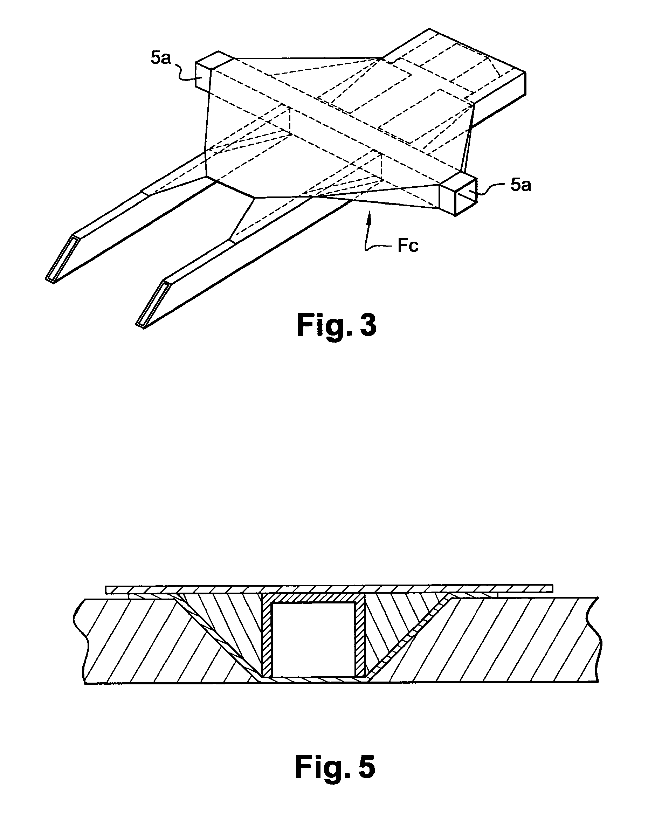

- la figure 3 est une vue de la structure du faux châssis seule et assemblée.

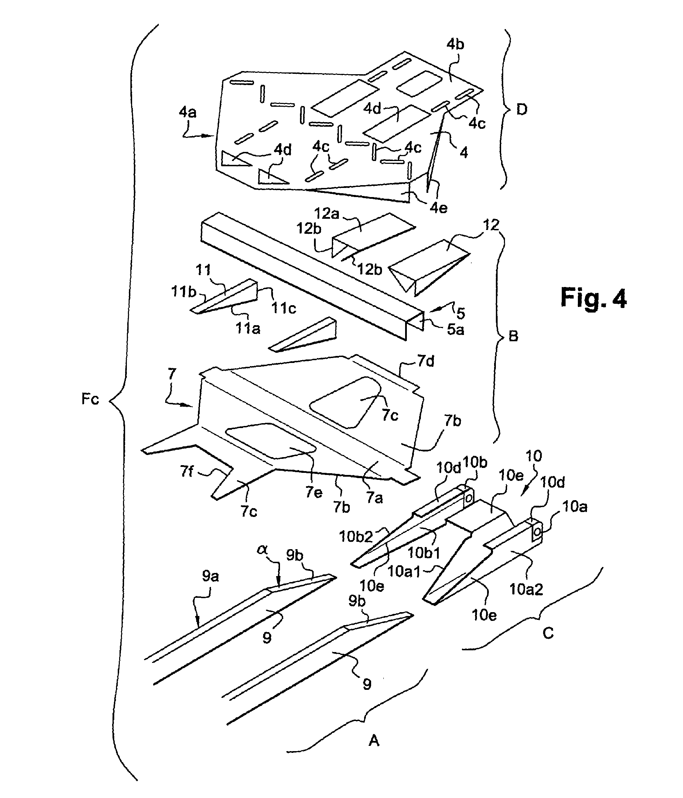

- la figure 4 est une vue éclatée avant montage et assemblage des composants de la structure de faux châssis.
- la figure 5 est une vue en coupe longitudinale selon la ligne A.A de la figure 3.

Afin de rendre plus concret l'objet de l'invention, on le décrit maintenant d'une manière non limitative illustrée aux figures des dessins.

Dans la terminologie de l'invention, on utilisera le terme générique camion porteur pour illustrer l'application à tout type de camion à benne, à au moins trois essieux, incluant une benne à relever.

L'invention s'applique principalement aux bennes qui doivent être levées à l'aide de vérins latéraux (2) disposés de part et d'autre de la benne (1), et dont le point de fixation du pied (2a), par exemple dans l'application représentée aux dessins, se trouve situé dans la partie basse du double essieux (3) pour abaisser le centre de gravité, et dont l'extrémité de la tige du vérin (2b) est accouplée à la benne dans la partie médiane de celle-ci. En variante, le pied (2a) de vérin (2) peut être disposé à tous autres endroits dans l'empattement du camion porteur.

La structure du faux châssis (FC) selon l'invention est destinée à être fixée et solidarisée de toute manière connue par soudure ou autre au châssis (4) du véhicule.

Selon l'invention, la nouvelle conception de la structure du faux châssis répond à différents objectifs d'optimisation dans sa rigidité, pour éviter tout effet de vrillage par suite des nombreuses et fortes sollicitations, et aussi à un objectif de rationnalisation de la fabrication, réduction des coûts de production, et aussi à un objectif de pouvoir s'adapter à tous endroits du châssis.

La nouvelle structure du faux châssis (FC) est ainsi conçue à partir de quatre sous-ensembles A-B-C-D profilés et agencés de manière complémentaire pour constituer après assemblage un ensemble unique et monobloc, deux sous-ensembles d'extrémités (A et C) formant notamment longerons solidarisés au châssis inférieur support, et prenant en sandwich le sous-ensemble (B) intermédiaire de construction complexe et incluant une poutre transversale (5) à partir de laquelle et à ses extrémités (5a) sont prévues et disposées les supports d'articulations des pieds (2a) des vérins (2) de soulèvement ou d'abaissement de la benne, et un sous-ensemble (D) constituant un plateau supérieur (4). Les quatre sous-ensembles s'adaptent et se positionnent les uns par rapport aux autres et le cas échéant s'emboîtent en étant liés à des endroits précis par soudure ou autre. Ces sous-ensembles sont fabriqués et profilés à partir de plaques de tôles profilées, avec pour certaines des zones de pliage spécifique contribuant à la rigidité de l'ensemble.

Le sous-ensemble (B) est profilé pour venir soit s'encastrer dans la zone intermédiaire d'un double essieux, soit dans l'empattement du châssis. Le sous-ensemble (B) comprend à cet effet une plate-forme profilée en Vé (7) avec un fond plat (7a) transversal, deux ailes (7b) obliques de part et d'autre selon une angulation α spécifique, lesdites ailes (7b) se prolongeant également par des plateaux horizontaux (7c-7d) de part et d'autre.

La partie à fond plat (7a) définit la base d'appui et de réception de la poutre transversale (5) et sa longueur est établie pour déboucher sensiblement latéralement de part et d'autre de la benne à lever. Ce fond plat (7a) reçoit fixement par soudure ou autrement un profilé en U qui est soudé à la base (5a) pour constituer ladite poutre transversale. A ses extrémités (5b), celle-ci (5) est agencée pour recevoir les supports d'articulation du pied (2b) des vérins (2). Les ailes (7b) obliques peuvent être agencées avec des ouvertures d'allègement (7e). Au delà de chacune desdites ailes est prévu un plateau (7c) venant en appui sur les chants (9a) horizontaux de deux longerons profilés (9) dont l'extrémité (9b) en regard de la partie intermédiaire (B) est à profil penté d'une même angulation α que celle de la plate-forme et constituer ainsi une zone d'appui. Ledit plateau (7c) peut ainsi être fixé par soudure ou autre sur les chants desdits longerons du faux châssis. Ce plateau (7c) peut présenter une découpe (7f) dans sa partie centrale pour allègement par exemple. L'autre plateau (7d) peut être établi sous forme d'une bande transversale régulière susceptible de venir en appui et fixation sur des zones horizontales formées à partir d'une base profilée (10) de rigidification agencée avec deux formes (10a-10b) formant longerons du faux châssis dans le prolongement axial des longerons (9) précités opposés.

A cet effet, la base profilée (10) constitue un ensemble monobloc avec les deux formes (10a-10b) précitées raccordées par leurs ailes intérieures (10a1-10b1), avec une plaque (10c) horizontale médiane d'appui et de fixation. Les ailes extérieures (10a2-10b2) présentent un repli intérieur horizontal (10d) constituant également un plan d'appui au même niveau que la partie plaque (10c). Lesdites formes (10a-10b) ont ainsi en extrémité un profil penté (10e) comme représenté aux dessins. A l'opposé desdits profils pentés (10e), lesdites formes (10a-10b) sont aménagées pour recevoir les paliers et axe d'articulation de la benne, et ce, selon un agencement connu. La plate-forme (7) étant positionnée entre les longerons (9) et la base profilée (10), la poutre transversale (5) est aussi positionnée et soudée et de part et d'autre de celle-ci sont prévus des coins de renforcement (11-12) qui viennent prendre en sandwich ladite poutre et se fixer sur les parties pentées (9a) des longerons -9) et les formes (10a-10b) pentées du profilé (10). Les coins de renforcement (11) ont une configuration triangulaire avec une face (11a) formant base pentée et en oblique pour s'appuyer et se fixer sur le chant penté (9b) en regard du longeron (9), tandis que le grand côté (11b) se trouve à l'horizontal dans le prolongement du chant horizontal desdits longerons (9) et le petit côté (11c) vient en contre appui contre la face en regard de la poutre transversale (5). Les autres coins de renforcement (12) sont établis en fonction de la configuration de la base profilée (10) avec un plan supérieur horizontal (12a) et deux ailes (12b) perpendiculaires qui s'ajustent sur les ailes (10a1-10a2) (10b1-10b2) dudit profilé (10). La liaison desdits coins de renforcement s'effectue par soudure ou autre.

Ces différents composants étant positionnés, on procède alors au positionnement du plateau supérieur (4) horizontal constitutif du sous-ensemble (D) qui est aménagé avec des formes complémentaires pour s'adapter aux formes et dimensions des autres sous-ensembles (A-B-C) et définir une structure d'appui très rigide et indéformable.

Le plateau supérieur (4) horizontal présente ainsi une configuration sensiblement en losange (4a) avec en prolongement arrière une bande (4b) qui est susceptible de venir en appui et se fixer sur la plaque (10c) et le repli intérieur (10d) formé à partir des ailes extérieures (10a2-10b2).

Le plateau supérieur (4) présente une pluralité de fentes oblongues (4c) qui sont disposées de manière très particulière aux endroits d'appui sur les autres sous-ensembles (A-B-C), c'est-à-dire les longerons (9) et le profilé (10), mais aussi par une ligne en zigzag le long de l'emplacement d'appui et de fixation avec la poutre transversale. Ces fentes permettent ainsi l'assemblage par soudure des composants entre eux.

De plus, à l'endroit de contact avec les coins de renforcement (11-12), le plateau supérieur présente des ouvertures (4d) autorisant l'assemblage par soudure du plateau supérieur avec les coins de renforcement et le plateau (7c).

Le plateau supérieur présente sur sa face de dessous des ailes (4e) qui sont orientées angulairement de manière identique aux bordures de la plate-forme en Ve (7) assurant ainsi un carénage parfait de l'ensemble.

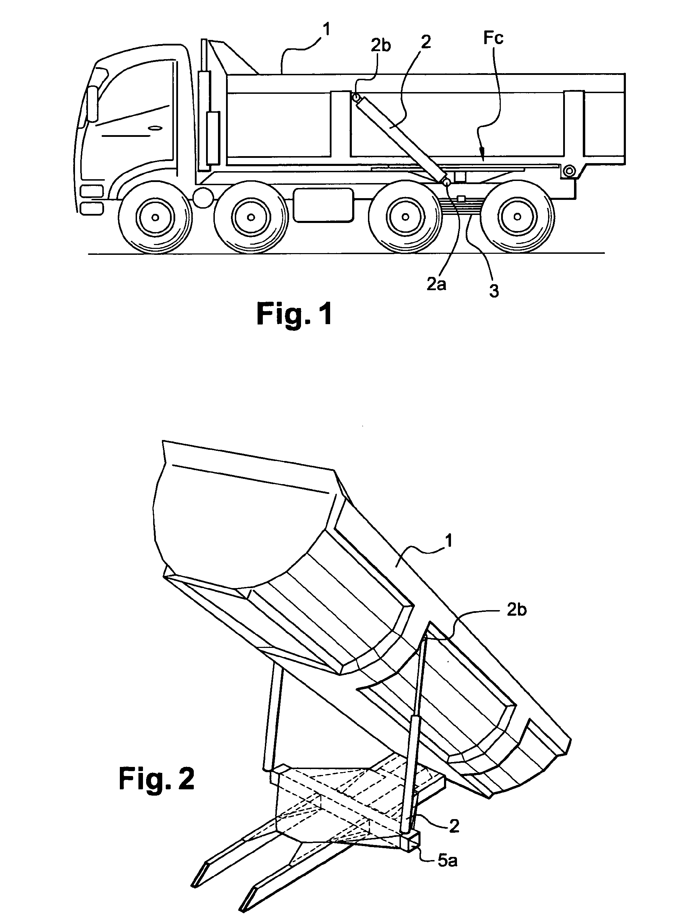

Le faux châssis (FC) ainsi agencé avec ces quatre sous-ensembles est particulièrement performant en terme de rigidité, et il est indéformable. De par les sollicitations très fortes existantes lors du bennage, ce faux châssis selon l'invention, optimise la structure d'élévation de la benne. On a ainsi représenté figure 2 la mise en place du faux châssis assemblé et le positionnement des vérins. Avantageusement, la tige de ceux-ci peut être fixée et accouplée à un bandeau de renforcement (13) formé et disposé autour de la benne dans sa partie médiane.

Les avantages ressortent bien de l'invention. La structure particulière du faux châssis (FC) est indéformable de par sa conception et fixation avec les zones disposées sensiblement en trapèze, celles recevant les supports d'articulations relatives au positionnement des vérins par rapport à la poutre transversale et fixation à la benne, et les deux autres par rapport aux longerons (9) et à la base profilée (10) qui reçoit en extrémité les moyens d'articulation de la benne. Cette structure ainsi décrite absorbe toutes les sollicitations de la benne en cours d'utilisation et empêche tout vrillage de la benne et déformation du faux châssis.

## Revendications

1. Structure de faux châssis adaptable sur des camions à bennes porteurs à au moins trois essieux du type à axe d'articulation et de levage par la partie médiane, **caractérisée en ce qu'**elle est conçue à partir de quatre sous-ensembles (A-B-C-D) profilés et agencés de manière complémentaire pour constituer après assemblage un ensemble unique et monobloc, et **en ce qu'**elle comprend deux sous-ensembles d'extrémités (A-C) formant longerons solidaires du châssis inférieur support du camion porteur et prenant en sandwich un sous-ensemble intermédiaire (B) incluant une poutre transversale (5) à partir de laquelle et à ses extrémités (5a) sont prévues et disposées les supports d'articulations des pieds (2a) des vérins (2) de soulèvement et d'abaissement de la benne, et un sous-ensemble (D) constituant un plateau supérieur (4) à partir duquel sont définies les zones de liaison des sous-ensembles entre eux.

2. Structure selon la revendication 1, **caractérisée en ce que** le sous-ensemble (B) comprend une plate-forme profilée en Vé (7) avec un fond plat (7a) transversal, deux ailes (7b) obliques de part et d'autre selon une angulation α spécifique, lesdites ailes (7b) se prolongeant également par des plateaux horizontaux (7c-7d) de part et d'autre.

3. Structure selon la revendication 2, **caractérisée en ce que** la partie à fond plat (7a) définit la base d'appui et de réception de la poutre transversale (5) et sa longueur est établie pour déboucher sensiblement latéralement de part et d'autre de la benne à lever, et **en ce que** ce fond plat (7a) reçoit fixement un profilé en U qui est soudé à la base (5a) pour constituer ladite poutre transversale, et **en ce que** à ses extrémités (5b), celle-ci (5) est agencée pour recevoir les supports d'articulation des pieds (2b) des vérins (2), et **en ce que** au delà de chacune desdites ailes est prévu un plateau (7c) venant en appui sur les chants (9a) horizontaux de deux longerons profilés (9) dont l'extrémité (9b) en regard de la partie intermédiaire (B) est à profil penté d'une même angulation α que celle de la plate-forme et constituer ainsi une zone d'appui.

4. Structure selon la revendication 3, **caractérisée en ce que** ledit plateau (7c) peut ainsi être fixé par soudure sur les chants desdits longerons du faux châssis.

5. Structure selon la revendication 3, **caractérisée en ce que** l'autre plateau (7d) peut être établi sous forme d'une bande transversale régulière susceptible de venir en appui et fixation sur des zones horizontales formées à partir d'une base profilée (10) de rigidification agencée avec deux formes (10a-10b) formant longerons du faux châssis dans le prolongement axial des longerons (9) précités opposés.

6. Structure selon les revendications 3 à 5, **caractérisée en ce que** les ailes (7b) obliques peuvent être agencées avec des ouvertures d'allègement (7e), et **en ce que** ce plateau (7c) peut présenter une découpe (7f) dans sa partie centrale pour allègement par exemple.

7. Structure selon la revendication 5, **caractérisée en ce que** la base profilée (10) constitue un ensemble monobloc avec les deux formes (10a-10b) précitées raccordées par leurs ailes intérieures (10a1-10b1), avec une plaque (10c) horizontale médiane d'appui et de fixation, et **en ce que** les ailes extérieures (10a2-10b2) présentent un repli intérieur horizontal (10d) constituant un plan d'appui au même niveau que la partie plaque (10c), et **en ce que** lesdites formes (10a-10b) ont en extrémité un profil penté (10e).

8. Structure selon la revendication 7, **caractérisée en ce que** la plate-forme (7) est positionnée entre les longerons (9) et la base profilée (10), la poutre transversale (5) est aussi positionnée et soudée et de part et d'autre de celle-ci sont prévus des coins de renforcement (11-12) qui viennent prendre en sandwich ladite poutre et se fixer sur les parties pentées (9a) des longerons - 9) et les formes (10a-10b) pentées du profilé (10).

9. Structure selon la revendication 8, **caractérisée en ce que** les coins de renforcement (11) ont une configuration triangulaire avec une face (11a) formant base pentée et en oblique pour s'appuyer et se fixer sur le chant penté (9b) en regard du longeron (9), tandis que le grand côté (11b) se trouve à l'horizontal dans le prolongement du chant horizontal desdits longerons (9) et le petit côté (11c) vient en contre appui contre la face en regard de la poutre transversale (5), et **en ce que** les autres coins de renforcement (12) sont établis en fonction de la configuration de la base profilée (10) avec un plan supérieur horizontal (12a) et deux ailes (12b) perpendiculaires qui s'ajustent sur les ailes (10a1-10a2) (10b1-10b2) dudit profilé (10), et **en ce que** la liaison desdits coins de renforcement (11-12) s'effectue par soudure ou autre.

10. Structure selon les revendications 1, 5 et 7, **caractérisée en ce que** le plateau supérieur (4) horizontal présente une configuration sensiblement en losange (4a) avec en prolongement arrière une bande (4b) qui est susceptible de venir en appui et se fixer sur la plaque (10c) et le repli intérieur (10d) formé à partir des ailes extérieures (10a2-10b2), et **en ce que** le plateau supérieur (4) présente une pluralité de fentes oblongues (4c) qui sont disposées aux endroits d'appui sur les autres sous-ensembles (A-B-C), à savoir les longerons (9) et le profilé (10), mais aussi par une ligne en zigzag le long de l'emplacement d'appui et de fixation avec la poutre transversale, et **en ce que** ces fentes permettent ainsi l'assemblage par soudure des composants entre eux.

11. Structure selon la revendication 10, **caractérisée en ce que** à l'endroit de contact avec les coins de renforcement (11-12), le plateau supérieur présente des ouvertures (4d) autorisant l'assemblage par soudure du plateau supérieur avec les coins de renforcement et le plateau (7c).

12. Structure selon la revendication 10, **caractérisée en ce que** le plateau supérieur présente sur sa face de dessous des ailes (4e) qui sont orientées angulairement de manière identique aux bordures de la plate-forme en Ve (7) assurant ainsi un carénage parfait de l'ensemble.

13. Structure selon les revendications 1 et 3 **caractérisée en ce que** la tige des vérins est fixée et accrochée à un bandeau de renforcement (13) formé et disposé autour de la benne dans sa partie médiane.

## Claims

1. - A body subframe structure that can be fitted on dump trucks with truck bodies having at least three axles of the central part pivoting and lifting pin type, **characterised in that** it is designed based on four subassemblies (A-B-C-D) shaped and arranged so that they match each other in order to constitute, after assembly, a single assembly of one-piece construction and **in that** it comprises two end subassemblies (A-C) forming side rails attached to the lower chassis which supports the dump truck and sandwich an intermediate subassembly (B) which includes cross member (5) on which and at the ends (5a) of which there are articulation supports for the bases (2a) of cylinders (2) for raising and lowering the truck body and subassembly (D) constituting upper deck (4) on which areas are defined for joining the subassemblies to each other.

2. - A structure as claimed in claim 1, **characterised in that** subassembly (B) comprises a V-shaped platform (7) with a crosswise flat bottom (7a), two slanting wings (7b) either side with a specific angulation α, said wings (7b) also extending as horizontal decks (7c-7d) either side.

3. - A structure as claimed in claim 2, **characterised in that** flat bottom part (7a) defines the base for supporting and receiving cross member (5) and its length is established so that it protrudes laterally substantially either side of the truck body to be lifted and **in that** flat bottom (7a) fixedly receives a channel which is welded to base (5a) in order to constitute said cross member and **in that** the ends (5b) of cross member (5) are designed to receive articulation supports for the bases (2b) of cylinders (2) and **in that** beyond each of said wings there is deck (7c) which rests on the horizontal edges (9a) of two shaped side rails (9), the end (9b) of which facing intermediate part (B) has a profile that slants with the same angulation α as that of the platform, thus constituting a support area.

4. - A structure as claimed in claim 3, **characterised in that** said deck (7c) can also be attached by welding to the edges of said side rails of the body subframe.

5. - A structure as claimed in claim 3, **characterised in that** the other deck (7d) may be in the form of a regular transverse strip capable of resting on and being fixed to the horizontal areas formed on shaped reinforcement base (10) designed with two shapes (10a-10b) forming side rails of the body subframe in the axial extension of above-mentioned opposite side rails (9).

6. - A structure as claimed in claims 3 to 5, **characterised in that** slanting wings (7b) can be designed with weight-saving openings (7e) and **in that** deck (7c) may have cut-out (7f) in its middle part in order to save weight for instance.

7. - A structure as claimed in claim 5, **characterised in that** shaped base (10) constitutes a one-piece assembly with the two above-mentioned shapes (10a-10b) joined by their inner wings (10a1-10b1) to central support and fixing horizontal deck (10c) and **in that** outer wings (10a2-10b2) have an inner horizontal fold (10d) constituting a bearing surface at the same level as deck part (10c) and **in that** said shapes (10a-10b) have an end with a slanting profile (10e).

8. - A structure as claimed in claim 7, **characterised in that** platform (7) is positioned between side rails (9) and shaped base (10), cross member (5) is also positioned and welded and either side of the latter there are reinforcing wedges (11-12) which sandwich said cross member and are attached to the slanting parts (9a) of side rails (9) and the slanting shapes (10a-10b) of section (10).

9. - A structure as claimed in claim 8, **characterised in that** reinforcing wedges (11) have a triangular configuration with one face (11a) forming an oblique slanting base in order to support and be attached to the opposite-facing slanting edge (9b) of side rail (9) whereas the long side (11b) is horizontal and is an extension of the horizontal edge of said side rails (9) and the short side (11c) presses against the opposite-facing face of cross member (5) and **in that** the other reinforcing wedges (12) are established depending on the configuration of shaped base (10) with an upper horizontal surface (12a) and two perpendicular wings (12b) which fit on wings (10a1-10a2) (10b1-10b2) of said section (10) and **in that** said reinforcing wedges (11-12) are joined by welding or another method.

10. - A structure as claimed in claims 1, 5 and 7, **characterised in that** upper horizontal deck (4) has a substantially rhomboid configuration (4a) and extends rearwardly as strip (4b) which is capable of resting on and being attached to deck (10c) and inner fold (10d) formed from outer wings (10a2-10b2) and **in that** this upper deck (4) has a plurality of oblong slits (4c) that are arranged at points where it rests on the other subassemblies (A-B-C), namely side rails (9) and section (10) but also by a zigzag line along the location where it is supported by and rests on the cross member and **in that** these slits thus allow assembly of the components to each other by welding.

11. - A structure as claimed in claim 10, **characterised in that** at its point of contact with reinforcing wedges (11-12), upper deck has openings (4d) allowing assembly of the upper deck to the reinforcing wedges and deck (7c) by welding.

12. - A structure as claimed in claim 10, **characterised in that** the upper deck has, on its underside, wings (4e) that are angularly oriented identically to the edges of V-shaped platform (7), thus ensuring perfect shielding of the assembly.

13. - A structure as claimed in claims 1 and 3, **characterised in that** the rod of the cylinders is attached and fastened to a reinforcing strip (13) formed and arranged around the middle part of the truck body.

## Patentansprüche

1. Hilfsrahmenstruktur für Kipper mit mindestens drei Achsen, lenkbar, und mit Kippgestell, **dadurch gekennzeichnet, dass** sie aus vier Untereinheiten (A-B-CD) besteht, die zusätzlich profiliert und derart angeordnet sind, dass sie nach der Montage eine einzige Blockeinheit bilden, und dass sie zwei Untereinheiten an den Enden (A-C) aufweist, die Längsträger bilden, welche mit dem unteren Rahmen verbunden sind, der den Kipper stützt, und eine Zwischen-Untereinheit (B) mit einem Querträger (5) zwischen sich aufnimmt, an dessen Enden (5a) Gelenkträger für die Füße (2a) der Hebevorrichtungen (2) zum Anheben und Absenken der Mulde vorgesehen und angeordnet sind, sowie eine Untereinheit (D) mit einer oberen Platte (4), über die die Verbindungszonen der Untereinheiten untereinander festgelegt sind.

2. Hilfsrahmenstruktur nach Anspruch 1, **dadurch gekennzeichnet, dass** die Untereinheit (B) V-förmige, profilierte Platte (7) mit einem flachen, querverlaufenden Boden (7a), zwei schrägen Schenkeln (7b) an jeder Seite mit einer speziellen α-Abknickung besitzt, wobei sich die Schenkel (7b) auch durch horizontale Platten (7c - 7d) zu beiden Seiten fortsetzen.

3. Hilfsrahmenstruktur nach Anspruch 2, **dadurch gekennzeichnet, dass** der flache Bodenabschnitt (7a) die Stützfläche und Aufnahmefläche für den Querträger (5) bildet, und seine Länge derart bestimmt ist, dass sie im wesentlichen seitlich entlang der beiden Seiten der anzuhebenden Mulde verläuft, und dass dieser flache Boden (7a) ein feststehendes U-Profil aufnimmt, das an die Basis (5a) angeschweißt ist, und den Querträger bildet, und dass dieser Querträger (5) an seinen Enden (5b) derart angeordnet ist, dass er die Gelenkträger für die Füße (2b) der Hebevorrichtungen (2) aufnimmt, und dass über jeden der Schenkel hinaus eine Platte (7c) vorgesehen ist, die auf den horizontalen Kanten (9a) der beiden profilierten Längsträger (9) aufliegt, deren Ende (9b) gegenüber dem Mittelteil (B) ein geneigtes Profil derselben Abknickung α besitzt, wie das der Platte, und somit eine Auflagezone darstellt.

4. Hilfsrahmenstruktur nach Anspruch 3, **dadurch gekennzeichnet, dass** die Platte (7c) auf diese Art und Weise durch Schweißen an den Kanten des Längsträgers des Hilfsrahmens befestigt werden kann.

5. Hilfsrahmenstruktur nach Anspruch 3, **dadurch gekennzeichnet, dass** die andere Platte (7d) in Form eines gleichmäßigen, querverlaufenden Bandes hergestellt werden kann, das auf den horizontalen Zonen, die über eine profilierte Versteifungsbasis (10) gebildet werden, aufliegen und an ihnen befestigt werden kann, wobei die profilierte Versteifungsbasis mit zwei Elementen (10a-10b) angeordnet ist, welche den Längsträger des Hilfsrahmens in der axialen Verlängerung der oben genannten, gegenüberliegenden Längsträger (9) bilden.

6. Hilfsrahmenstruktur nach Anspruch 3 bis 5, **dadurch gekennzeichnet, dass** die schrägen Schenkel (7b) mit Entlastungsöffnungen (7e) angeordnet werden können, und dass diese Platte (7c) in ihrem Mittelteil einen Ausschnitt (7f), beispielsweise zur Entlastung, aufweisen kann.

7. Hilfsrahmenstruktur nach Anspruch 5, **dadurch gekennzeichnet, dass** die profilierte Basis (10) mit den beiden vorgenannten, durch ihre Innenschenkel (10a1 - 10b1) verbundenen, Elementen (10a - 10b) eine Blockeinheit mit einer mittleren, horizontalen Trag- und Befestigungsplatte (10c) bildet, und dass die Außenschenkel (10a2 - 10b2) einen horizontalen Innenfalz (10d) aufweisen, der eine Auflagefläche auf gleicher Höhe mit dem Plattenabschnitt (10c) bildet, und dass die Elemente (10a-10b) an ihrem Ende ein geneigtes Profil (10e) besitzen.

8. Hilfsrahmenstruktur nach Anspruch 7, **dadurch gekennzeichnet, dass** die Platte (7) zwischen den Längsträgern (9) und der profilierten Basis (10) angeordnet ist, ebenso wie der Querträger (5) angeordnet und angeschweißt ist, und zu beiden Seiten dieses Querträgers sind Verstärkungsecken (11-12) vorgesehen, die den Träger zwischen sich aufnehmen, und an den geneigten Abschnitten (9a) der Längsträger (9) und den geneigten Elementen (10a-10b) des Profils (10) befestigt sind.

9. Hilfsrahmenstruktur nach Anspruch 8, **dadurch gekennzeichnet, dass** die Verstärkungsecken (11) dreieckig sind, wobei eine Seite (11a) die geneigte, schräge Basis bildet, die sich auf der geneigten Kante (9b) gegenüber dem Längsträger (9) abstützt und an ihm befestigt ist, während sich die Längsseite (11b) horizontal in der Verlängerung der horizontalen Kante der Längsträger (9) befindet, und die Schmalseite (11c) sich gegen die Seite gegenüber dem Querträger (5) abstützt, und dass die anderen Verstärkungsecken (12) entsprechend der Konfiguration der profilierten Basis (10) mit einer oberen, horizontalen Ebene (12a) und zwei senkrechten Schenkeln (12b) ausgeführt sind, die sich an den Schenkeln (10a1-10a2) (10b1-10b2) des Profils (10) befinden, und dass die Verbindung der Verstärkungsecken (11-12) durch Schweißen oder eine andere Verbindung erfolgt.

10. Hilfsrahmenstruktur nach den Ansprüchen 1, 5 und 7, **dadurch gekennzeichnet, dass** die obere, horizontale Platte (6) im wesentlichen die Konfiguration eines Rhombus (4a) besitzt, mit einem Band (4b) in der hinteren Verlängerung, das auf der Platte (10c) aufliegt und an ihr befestigt ist, und dem Innenfalz (10d), der über die Außenschenkel (10a2-10b2) gebildet wird, und dass die obere Platte (4) eine Vielzahl länglicher Schlitze (4c) aufweist, die an den Auflagestellen auf den anderen Untereinheiten (A-B-C), nämlich den Längsträgern (9) und dem Profil (10), angeordnet sind, aber auch durch eine zickzackförmige Linie entlang der Auflagestelle und Befestigungsstelle mit dem Querträger, und dass diese Schlitze auf diese Art und Weise die Montage der Bauteile untereinander durch Verschweißen ermöglichen.

11. Hilfsrahmenstruktur nach Anspruch 10, **dadurch gekennzeichnet, dass** die obere Platte an der Kontaktstelle mit den Verstärkungsecken (11-12) Öffnungen (4d) aufweist, die die Zusammenfügung der oberen Platte mit den Verstärkungsecken und der Platte (7c) durch Verschweißen erlaubt.

12. Hilfsrahmenstruktur nach Anspruch 10, **dadurch gekennzeichnet, dass** die obere Platte auf ihrer Unterseite Schenkel (4e) aufweist, die im Winkel wie die Kanten der V-förmigen Platte (7) ausgerichtet sind, so dass auf diese Art und Weise eine perfekte Verkleidung der Einheit gewährleistet ist.

13. Hilfsrahmenstruktur nach den Ansprüchen 1 und 3, **dadurch gekennzeichnet, dass** die Stange der Hebeeinrichtung an einem Verstärkungsband (13) befestigt und eingehängt ist, das um die Mulde herum in ihrem Mittelteil gebildet und angeordnet ist.
